(19) **Europäisches Patentamt**
**European Patent Office**
**Office européen des brevets**

(11) **EP 3 643 517 B1**

(12) **EUROPEAN PATENT SPECIFICATION**

(45) Date of publication and mention
of the grant of the patent:
**13.04.2022 Bulletin 2022/15**

(21) Application number: **18821087.6**

(22) Date of filing: **19.06.2018**

(51) International Patent Classification (IPC):
**B60C 9/18** *(2006.01)* **B60C 9/00** *(2006.01)*
**B60C 9/20** *(2006.01)*

(52) Cooperative Patent Classification (CPC):
**B60C 9/2009; B60C 9/005;** B60C 2009/2016;
B60C 2009/2038; B60C 2009/2074

(86) International application number:
**PCT/JP2018/023356**

(87) International publication number:
**WO 2018/235837 (27.12.2018 Gazette 2018/52)**

(54) **PNEUMATIC TIRE**

LUFTREIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.06.2017 JP 2017120913**

(43) Date of publication of application:
**29.04.2020 Bulletin 2020/18**

(73) Proprietor: **Bridgestone Corporation**
**Tokyo 104-8340 (JP)**

(72) Inventors:
• **AIKAWA Eisuke**
**Tokyo 104-8340 (JP)**

• **NAKAMURA Masaaki**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
EP-A1- 0 929 406    WO-A1-2008/078476
WO-A1-2015/156405    WO-A1-2017/065305
JP-A- H 079 814    JP-A- H03 292 204
JP-A- H11 342 704    JP-A- 2006 137 372
JP-A- 2006 182 256    JP-A- 2008 024 104
JP-A- 2013 159 325    JP-A- 2017 074 854
US-A1- 2005 173 042

EP 3 643 517 B1

**Description**

TECHNICAL FIELD

The present invention relates to a pneumatic tire, more particularly a pneumatic tire whose durability is improved by inhibiting crack generation at belt ends (this pneumatic tire is hereinafter also simply referred to as "tire").

BACKGROUND ART

Conventionally, as reinforcing materials of rubber articles, a variety of organic fibers, metal materials and the like have been examined and used. Particularly, as reinforcing materials used for reinforcement of rubber articles such as pneumatic tires that are subjected to strain input, cord materials whose adhesion with a rubber is improved by coating with an adhesive composition have been used conventionally.

In addition, as one type of organic fiber, the use of a so-called "core-sheath fiber", whose cross-sectional structure is constituted by a core portion forming the center and a sheath portion covering the periphery of the core portion, as a reinforcing material has been examined in various studies. For example, Patent Document 1 discloses a rubber-fiber composite obtained by coating a reinforcing material with a rubber, the reinforcing material being composed of core-sheath type composite fibers whose core portion is constituted by a high-melting-point resin having a melting point of 150°C or higher and sheath portion is constituted by an olefin-based polymer having a melting point lower than that of the high-melting-point resin. Reference is also made to EP0929406, JP2008024104 and US 2005/173042.

RELATED ART DOCUMENT

PATENT DOCUMENT

[Patent Document 1] WO 2017/030121

SUMMARY OF THE INVENTION

PROBLEMS TO BE SOLVED BY THE INVENTION

Today, tires that include intersecting belts laminated in such a manner that their reinforcing cord directions intersect with each other are known as pneumatic tires. The tires including such intersecting belts have a problem in that a shear strain in the tire circumferential direction is generated at end portions of the intersecting belts during tire rolling under load, and cracks are consequently generated from such end portions of the intersecting belts.

In order to solve this problem, many proposals have been made to arrange a reinforcing layer at belt ends. However, since the added reinforcing layer also has end portions, there is a concern that a shear strain in the tire circumferential direction may be generated at these end portions of the reinforcing layer to cause cracking therefrom. Therefore, it is believed necessary to make a further improvement with regard to this problem.

An object of the present invention is to provide a pneumatic tire whose durability is improved by inhibiting crack generation at belt ends.

MEANS FOR SOLVING THE PROBLEMS

The present inventors intensively studied to solve the above-described problem and consequently discovered that the problem can be solved by controlling a reinforcing layer arranged at a belt end to have a prescribed arrangement position and a prescribed angle and using prescribed cords as reinforcing cords of this reinforcing layer, thereby completing the present invention.

That is, the pneumatic tire of the present invention is a pneumatic tire including: a belt including an intersecting belt composed of a wide belt layer having a large width and a narrow belt layer having a small width that are laminated such that their reinforcing cord directions intersect with each other, radially between the wide belt layer and the narrow belt layer a reinforcing layer is arranged,

wherein a widthwise inner end of the reinforcing layer is on an inner side than a widthwise end of the narrow belt layer, while a widthwise outer end of the reinforcing layer is on an outer side than the widthwise end of the narrow belt layer but on the inner side than a widthwise end of the wide belt layer, characterized in that:

core-sheath type composite fibers (C), whose core portion is composed of a high-melting-point resin (A) having a melting point of 150°C or higher and sheath portion is composed of a resin material (B) that contains an olefin-based polymer (D) having a melting point of not higher than a tire vulcanization temperature, are embedded in the reinforcing layer, and

an angle of the core-sheath type composite fibers (C) is substantially the same as that of a reinforcing cord of the narrow belt layer,

wherein the angle of the core-sheath type composite fibers (C) refers to the angle of inclination of the fibers with respect to the circumferential direction, and

wherein substantially the same refers to a case where the difference between the angle of the core-sheath type composite fibers (C) of the reinforcing layers and the angle of the reinforcing cords of the narrow belt layer is 5° or smaller.

It is noted here that the melting point is measured by a DSC method in accordance with JIS K7121.

In the tire of the present invention, it is preferred that a reinforcing cord of the wide belt layer and a reinforcing cord of the narrow belt layer each have an angle of 30° or smaller in an absolute value with respect to a circumferential direction. In the tire of the present invention, it is also preferred that a difference between a half-width of the narrow belt layer and that of the wide belt layer be 5 to 40 mm. The tire of the present invention can be preferably applied as a tire in which the belt includes four belt layers and the intersecting belt is composed of second and third belt layers from a tire radial-direction inner side, or a tire in which the belt includes four belt layers and the intersecting belt is composed of first and third belt layers from a tire radial-direction inner side.

EFFECTS OF THE INVENTION

According to the present invention, a pneumatic tire whose durability is improved by inhibiting crack generation at belt ends can be realized.

BRIEF DESCRIPTION OF THE DRAWINGS

[FIG. 1] FIG. 1 is a widthwise cross-sectional view illustrating a pneumatic tire according to one preferred embodiment of the present invention.

[FIG. 2A] FIG. 2A illustrates one example of the belt structure of a conventional pneumatic tire.

[FIG. 2B] FIG. 2B is a layout view of the positional relationship of belt layers and reinforcing layers illustrating one example of the structure of the belt and reinforcing layers of a pneumatic tire according to the present invention.

[FIG. 3] FIG. 3 is a layout view illustrating the arrangement positions of the belt layers and reinforcing layers of the pneumatic tire according to another preferred embodiment of the present invention.

[FIG. 4] FIG. 4 is a layout view illustrating the arrangement positions of the belt layers and reinforcing layers of the pneumatic tire according to yet another preferred embodiment of the present invention.

[FIG. 5] FIG. 5 is a layout view illustrating the arrangement positions of the belt layers and reinforcing layers of the pneumatic tire according to yet another preferred embodiment of the present invention.

[FIG. 6] FIG. 6 is a layout view illustrating the arrangement positions of the belt layers and reinforcing layers of the pneumatic tire according to yet another preferred embodiment of the present invention.

MODE FOR CARRYING OUT THE INVENTION

The pneumatic tire of the present invention will now be described in detail referring to the drawings.

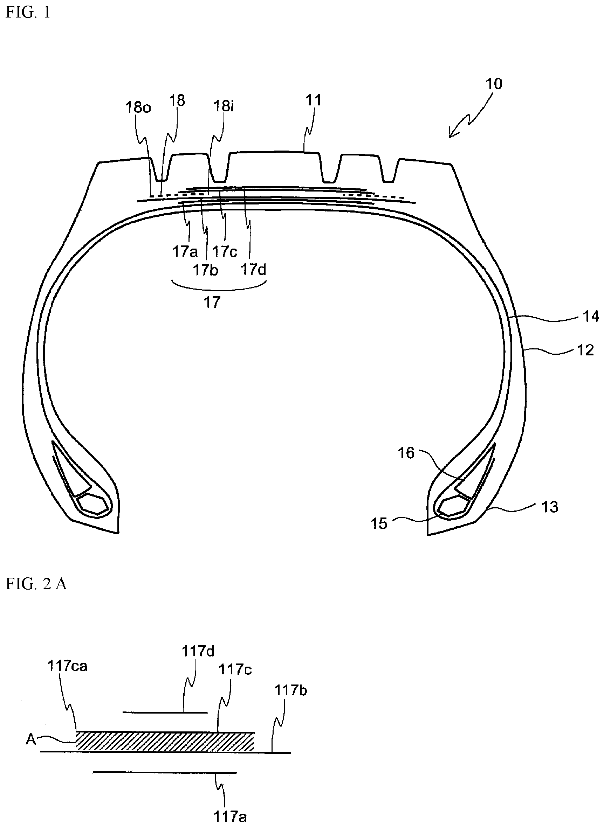

FIG. 1 is a widthwise cross-sectional view illustrating a pneumatic tire according to one preferred embodiment of the present invention. As illustrated, a tire 10 includes: a tread portion 11 which forms a ground-contact part; a pair of side wall portions 12 which continuously extend inward in the tire radial direction on the respective sides of the tread portion 11; and bead portions 13 which continuously extend on the circumferential inner side of the respective side wall portions 12. The tread portion 11, the side wall portions 12 and the bead portions 13 are reinforced by a carcass 14, which is composed of a single carcass ply toroidally extending from one bead portion 13 to the other bead portion 13. In the illustrated tire 10, bead cores 15 are each embedded in the pair of the bead portions 13, and the carcass 14 is folded around the bead cores 15 from the inside to the outside of the tire and thereby anchored. In addition, bead fillers 16 are embedded on the tire radial-direction outer side of the respective bead cores 15.

The tire 10 of the present invention includes a belt having an intersecting belt composed of a wide belt layer having a large width and a narrow belt layer having a small width that are laminated such that their reinforcing cord directions intersect with each other. In the illustrated example, a belt 17, which is constituted by four belt layers of first to fourth belt layers 17a to 17d from the tire radial-direction inner side, is arranged. The second belt layer 17b and the third belt layer 17c are a wide belt layer 17b and a narrow belt layer 17c, respectively, and these belt layers constitute an intersecting belt in which reinforcing cords intersect with each other across the tire equatorial plane. The first belt layer 17a and the fourth belt layer 17d are not particularly restricted and may each be a belt layer having a known structure, such as a circumferential belt layer in which reinforcing cords are arranged at an angle of 5° or smaller with respect to the tire circumferential direction, or an inclined belt layer in which reinforcing cords are arranged in an inclined manner at a prescribed angle with respect to the tire circumferential direction. Further, the reinforcing cords of the belt layers 17a to 17d are not particularly restricted, and steel cords or organic fiber cords can be used. In the tire of the present invention, the "intersecting belt" refers to a belt in which reinforcing cords are arranged at an angle of larger than 5° with respect to the tire circumferential direction across the tire equatorial plane.

In the tire 10 of the present invention, reinforcing layers 18 are arranged between the wide belt layer and the narrow belt layer (between the second belt layer 17b and the third belt layer 17c in the illustrated example). A widthwise inner end 18i of each reinforcing layer 18 is on the inner side than a widthwise end of the narrow belt layer 17c, while a widthwise outer end 18o of each reinforcing layer 18 is on the outer side than the widthwise end of the narrow belt layer 17c but on the inner side than a widthwise end of the wide belt layer 17b.

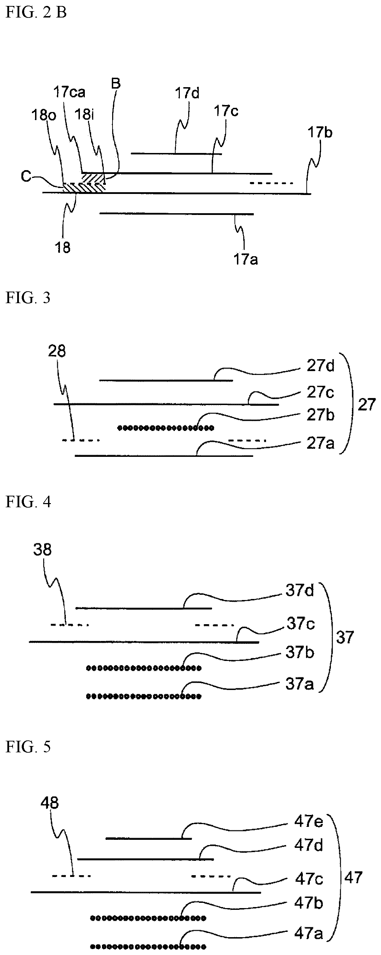

FIG. 2A illustrates one example of the belt structure of a conventional pneumatic tire. FIG. 2B is the layout view of a positional relationship of belt layers and reinforcing layers illustrating one example of the structure of the belt and reinforcing layers of a pneumatic tire according to the present invention. In the example illustrated in FIG. 2A, the conventional tire includes four belt layers 117a to 117d, and a second belt layer 117b and a third belt layer 117c constitute an intersecting belt. A rubber in a region A sandwiched between the second belt layer 117b and the third belt layer 117c is restrained by the second belt layer 117b and the third belt layer 117c. In contrast, a rubber on the width-direction outer side than the third belt layer 117c, which is a narrow belt layer, is not restrained. Therefore, during rolling of the tire under load, an end 117ca of the third belt layer 117c that is a narrow belt layer is severely strained, and cracking occurs therefrom.

Accordingly, in the tire 10 of the present invention, as illustrated in FIG. 2B, the reinforcing layers 18 are arranged between the second belt layer 17b that is a wide belt layer and the third belt layer 17c that is a narrow belt layer. Further, as reinforcing cords of the reinforcing layers 18, core-sheath type composite fibers (C), whose core portion is composed of a high-melting-point resin (A) having a melting point of 150°C or higher and sheath portion is composed of a resin material (B) that contains an olefin-based polymer (D) having a melting point of not higher than a tire vulcanization temperature, are used, and the angle of the core-sheath type composite fibers (C) of the reinforcing layers 18 is controlled to be substantially the same as the angle of reinforcing cords of the third belt layer 17c that is a narrow belt layer.

With the reinforcing layers 18 being arranged between the wide belt layer 17b and the narrow belt layer 17c, a rubber in a region B sandwiched between the narrow belt layer 17c and each reinforcing layer 18 is restrained by the narrow belt layer 17c and the reinforcing layer 18. However, since the angle of the reinforcing cords of the narrow belt layer 17c and the angle of the core-sheath type composite fibers (C) of the reinforcing layers 18 are substantially the same, the reinforcing layers 18 can conform to the narrow belt layer 17c when deformed during rolling of the tire under load. Therefore, a strain applied to an end 17ca of the narrow belt layer 17c is relaxed, whereby crack generation from the end 17ca of the narrow belt layer 17c can be suppressed. The term "substantially the same" used herein refers to a case where the difference between the angle of the core-sheath type composite fibers (C) of the reinforcing layers 18 and the angle of the reinforcing cords of the narrow belt layer 17c is 5° or smaller.

Meanwhile, a rubber in a region C sandwiched between the wide belt layer 17b and each reinforcing layer 18 is restrained by these layers, and the ends of the reinforcing layer 18 are severely strained as a result. However, in the core-sheath type composite fibers (C) which are reinforcing cords of the reinforcing layers 18, the resin material (B) constituting the sheath portion contains the olefin-based polymer (D) having a melting point of not higher than a temperature used in tire vulcanization. In the core-sheath type composite fibers (C), cut end surfaces of the core portion that are exposed prior to vulcanization are covered by the resin of the sheath portion that is melted by the heat applied during the vulcanization, whereby the resin of the sheath portion and the rubber can be strongly fused together in these parts as well. Accordingly, since the reinforcing layers 18 of the vulcanized tire no longer have such an end of a belt layer, cracking does not occur from the widthwise outer end 18o of each reinforcing layer 18 even when strain is concentrated thereon. In other words, in the tire 10 of the present invention, crack generation from a belt layer end is inhibited by allowing strain to be concentrated at the ends of the core-sheath type composite fibers (C) which are reinforcing cords of the reinforcing layers 18.

In the illustrated example, the belt layer on the tire radial-direction inner side is a wide belt layer while the belt layer on the tire radial-direction outer side is a narrow belt layer; however, the belt layer on the tire radial-direction inner side can be a narrow belt layer while the belt layer on the tire radial-direction outer side can be a wide belt layer, and these belt layers may be designed as appropriate in accordance with the intended purpose. Further, there is no particular restriction on the number of belt layers and the positions of the wide belt layer and the narrow belt layer.

In the tire 10 of the present invention, it is preferred that a reinforcing cord of the wide belt layer 17b and a reinforcing cord of the narrow belt layer 17c each have an angle of 30° or smaller in an absolute value with respect to the circumferential direction. A tire having a smaller angle of intersecting belt layers with respect to the circumferential direction in this manner is subjected to more severe strains at the belt layer ends; therefore, the effects of the present invention are more prominent in such a tire. The above-described angle is more preferably 15 to 20°.

Further, in the tire 10 of the present invention, it is preferred that a difference between a half-width of the narrow belt layer 17c and that of the wide belt layer 17b be 5 to 40 mm. The larger the width of the narrow belt layer 17c, the more severe are the strains applied to the ends of the narrow belt layer 17c; therefore, in such a tire, it is more meaningful to arrange the reinforcing layers 18 between the wide belt layer 17b and the narrow belt layer 17c, and the effects of the present invention are more prominent. The difference between the half-width of the narrow belt layer 17c and that of the wide belt layer 17b is more preferably 5 to 15 mm.

In the tire 10 of the present invention, the belt structure is not particularly restricted as long as the above-described relationships are satisfied and, as illustrated in the drawings, the present invention can be suitably applied to even a tire in which the belt 17 is constituted by four belt layers and the intersecting belt layers are the second and the third belt layers from the tire radial-direction inner side, and a tire in which the belt is constituted by five belt layers and the intersecting belt layers are the third and the fourth belt layers from the tire radial-direction inner side. Further, the belt layers other than those of the intersecting belt are not particularly restricted, and a circumferential belt layer and/or an inclined belt layer may be arranged as well.

In the tire 10 of the present invention, a wide belt layer and a narrow belt layer are not necessarily required to be adjacent to each other, and other belt layer such as a circumferential belt layer may be arranged between the wide belt layer and the narrow belt layer. FIG. 3 is a layout view illustrating the arrangement positions of the belt layers and reinforcing layers of the pneumatic tire according to another preferred embodiment of the present invention. In the illustrated example, a belt is constituted by four belt layers 27a to 27d; a first belt layer 27a, which is a narrow belt layer, and a third belt layer 27c, which is a wide belt layer, are intersecting belt layers; and a second belt layer 27b and reinforcing layers 28, which are circumferential belt layers, are arranged between the first belt layer 27a and the third belt layer 27c. Even in this structure, strains at the ends of the first belt layer 27a that is a narrow belt layer can be reduced by arranging the reinforcing layers 28 in the above-described manner. It is noted here that, in the illustrated example, a fourth belt layer 27d is an inclined belt layer.

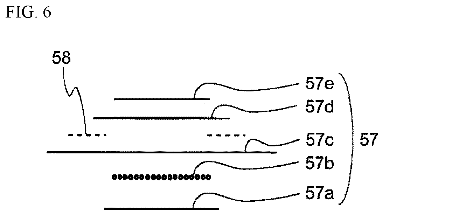

FIGs. 4 to 6 are layout views each illustrating the arrangement positions of the belt layers and reinforcing layers of the pneumatic tire according to yet another preferred embodiment of the present invention. In FIG. 4, a belt is constituted by four belt layers 37a to 37d, and a first belt layer 37a and a second belt layer 37b are circumferential belt layers, while a third belt layer 37c and a fourth belt layer 37d are intersecting belt layers. Reinforcing layers 38 are arranged between the third belt layer 37c and the fourth belt layer 37d. The widths of these belt layers have the following relationship: third belt layer 37c > fourth belt layer 37d > first belt layer 37a = second belt layer 37b. Further, in FIG. 5, a belt is constituted by five belt layers 47a to 47e, and a third belt layer 47c and a fourth belt layer 47d are intersecting belt layers between which reinforcing layers 48 are arranged. As for other belt layers, a first belt layer 47a and a second belt layer 47b are circumferential belt layers, while a fifth belt layer 47e is an inclined belt layer. The widths of these belt layers have the following relationship: third belt layer 47c > fourth belt layer 47d > first belt layer 47a $\geq$ second belt layer 47b > fifth belt layer 47e. Moreover, in FIG. 6, a belt is constituted by five belt layers 57a to 57e, and a third belt layer 57c and a fourth belt layer 57d are intersecting belt layers between which reinforcing layers 58 are arranged. As for other belt layers, a first belt layer 57a and a fifth belt layer 57e are inclined belt layers, while a second belt layer 57b is a circumferential belt layer. The widths of these belt layers have the following relationship: third belt layer 57c > fourth belt layer 57d > first belt layer 57a > second belt layer 57b > fifth belt layer 57e.

Next, the core-sheath type composite fibers (C) of the reinforcing layer according to the tire of the present invention will be described. In the reinforcing layer of the present invention, core-sheath type composite fibers (C), whose core portion is composed of a high-melting-point resin (A) having a melting point of 150°C or higher and sheath portion is composed of a resin material (B) containing an olefin-based polymer (D) having a melting point of not higher than a tire vulcanization temperature, are embedded. The "tire vulcanization temperature" is not particularly restricted; however, it generally means 160°C or lower, which is an industrial tire vulcanization temperature. A heavy tire is vulcanized at about 145°C for a prolonged period so as to prevent the tire from being left unvulcanized with only the tire surface being over-vulcanized; therefore, the tire vulcanization temperature is more preferably 145°C or lower.

In the core-sheath type composite fibers (C) used in the present invention, since the resin material (B) constituting the sheath portion contains the olefin-based polymer (D) having a melting point of not higher than a temperature used in tire vulcanization, there is an advantage that the core-sheath type composite fibers (C), when applied for the reinforcement of a rubber article, can be directly adhered with a rubber through thermal fusion by the heat applied during vulcanization. In other words, the core-sheath type composite fibers (C) of the present invention are embedded in a rubber; however, since integration of the core-sheath type composite fibers (C) with the rubber does not require a dipping treatment in which an adhesive composition (e.g., a resorcin-formalin-latex (RFL) adhesive) conventionally used for bonding tire cords is adhered, the bonding step can be simplified. Further, in the application for the reinforcement of a tire or the like, when organic fibers are adhered with a rubber using an adhesive composition, it is generally required to coat the organic fibers with a fiber coating rubber (skim rubber) in order to secure an adhesive strength; however, according to the core-sheath type composite fibers (C) of the present invention, a high adhesive strength between the core-sheath type composite fibers (C) and a rubber can be directly attained through thermal fusion without requiring a fiber coating rubber.

Further, when the core-sheath type composite fibers (C) of the present invention are vulcanized, at a cut end of the resultant, the cut end surface of the core portion that was exposed prior to the vulcanization is covered by the resin of the sheath portion, and the resin of the sheath portion and a rubber can be strongly fused together in this part as well. The reason for this is believed to be because a low-melting-point resin material constituting the sheath portion is fluidized by the heat applied during the vulcanization and infiltrates into gaps between the cut end surface of the core portion constituted by a high-melting-point resin and the rubber. Consequently, the durability against strain after the vulcanization can be further improved. With regard to the covering of the cord ends during the vulcanization, although the core portion not melted during the vulcanization thermally contracts in the cord lengthwise direction, the sheath portion does not contract and is melted and fluidized; therefore, the cord ends are consequently covered with the resin of the sheath portion.

In the core-sheath type composite fibers (C) of the present invention, the melting point of the high-melting-point resin (A) constituting the core portion is 150°C or higher, preferably 160°C or higher. When the melting point of the high-melting-point resin (A) is lower than 150°C, for example, the core portions of the composite fibers are melt-deformed and reduced in thickness and/or the orientation of the fiber resin molecules is deteriorated during vulcanization of a rubber article; therefore, sufficient reinforcing performance is not attained. Further, in the core-sheath type composite fibers (C) of the present invention, the lower limit of the melting point of the olefin-based polymer (D) constituting the sheath portion is in a range of preferably 80°C or higher, more preferably 120°C or higher, still more preferably 135°C or higher. When the melting point of the olefin-based polymer (D) is lower than 80°C, a sufficient adhesive strength may not be obtained due to, for example, formation of fine voids on the surface if the rubber is fluidized and thus does not adequately adhere to the surface of the resin material (B) in the early stage of vulcanization. The melting point of the olefin-based polymer (D) is preferably 120°C or higher since this enables to simultaneously perform thermal fusion of the rubber and the low-melting-point resin material and a vulcanization cross-linking reaction of the resulting rubber composition at a vulcanization temperature of 130°C or higher that can be used industrially for rubber compositions in which sulfur and a vulcanization accelerator are incorporated. In cases where the vulcanization temperature is set at 170°C or higher in order to industrially shorten the vulcanization time and the melting point of the olefin-based polymer (D) is lower than 80°C, since the viscosity of the molten resin is excessively low and the thermal fluidity is thus high during vulcanization, a pressure applied during vulcanization may cause generation of a thin part in the sheath and a strain stress applied in an adhesion test or the like may be concentrated in such a thin part of the sheath resin to make this part more likely to be broken; therefore, the melting point of the olefin-based polymer (D) is more preferably 120°C or higher. Meanwhile, when the upper limit of the melting point of the olefin-based polymer (D) is lower than 150°C, because of the thermal fluidity of the resin material, compatibility with a rubber composition in the early stage of vulcanization may be attained at a high vulcanization temperature of 175°C or higher. Further, when the melting point of the olefin-based polymer (D) is 145°C or lower, resin compatibility in the early stage of vulcanization can be attained at a common vulcanization temperature, which is preferred.

The core-sheath type composite fibers (C) of the present invention have a core-sheath structure in which the sheath portion is constituted by the resin material (B) containing the olefin-based polymer (D) having a low melting point and can be directly adhered with a rubber through thermal fusion and, at the same time, the core portion is constituted by the high-melting-point resin (A) having a melting point of 150°C or higher. When the composite fibers (C) are, for example, single-component monofilament cords, the effects of the present invention cannot be attained. In the case of a conventional single-component monofilament cord that is made of a polyolefin-based resin or the like and has a low melting point, the monofilament cord forms a melt through thermal fusion with the rubber of a rubber article and can thereby be wet-spread and adhered to the adherend rubber; however, once the monofilament cord is melted to yield a melt and the molecular chains of the fiber resin that are oriented in the cord direction become unoriented, the tensile rigidity that is required as a rubber-reinforcing cord material can no longer be maintained. Meanwhile, when the monofilament cord has such a high melting point that does not cause its resin to form a melt even under heating, the melt fusibility with a rubber is deteriorated. Therefore, in a single-component monofilament cord that is not the core-sheath type composite fibers (C) of the present invention, it is difficult to achieve both conflicting functions of maintaining the tensile rigidity and maintaining the melt fusibility with a rubber.

In the core-sheath type composite fibers (C) of the present invention, the high-melting-point resin (A) having a melting point of 150°C or higher that constitutes the core portion is not particularly restricted as long as it is a known resin that is capable of forming a filament when melt spun, and the high-melting-point resin (A) can be a resin that contains a polymer selected from a polyolefin-based resin (P), a polyester resin (Q) and a polyamide resin (R), which have a melting point of 150°C or higher. Specific examples thereof include polyester resins (Q), such as polypropylene (PP), polyethylene terephthalate (PET), polybutylene terephthalate (PBT), polyethylene naphthalate (PEN) and polytrimethylene terephthalate (PTT); and polyamide resins (R), such as nylon 6, nylon 66 and nylon 12, and the high-melting-point resin (A) is preferably a polyester-based resin, a polyolefin-based resin, or the like. The polyester-based resin is particularly preferably, for example, a polytrimethylene terephthalate (PTT) resin.

The polytrimethylene terephthalate resin may be a polytrimethylene terephthalate homopolymer or copolymer, or a mixture thereof with other mixable resin. Examples of a copolymerizable monomer of the polytrimethylene terephthalate copolymer include acid components, such as isophthalic acid, succinic acid, and adipic acid; glycol components, such as 1,4-butanediol and 1,6-hexanediol; polytetramethylene glycols; and polyoxymethylene glycols. The content of these copolymerizable monomers is not particularly restricted; however, it is preferably 10% by mass or less since these monomers reduce the flexural rigidity of the copolymer. Examples of a polyester-based resin that can be mixed with a polytrimethylene terephthalate-based polymer include polyethylene terephthalates and polybutylene terephthalates, and the polyester resin may be mixed in an amount of 50% by mass or less.

The intrinsic viscosity $[\eta]$ of the polytrimethylene terephthalate is preferably 0.3 to 1.2, more preferably 0.6 to 1.1. When the intrinsic viscosity is lower than 0.3, the strength and the elongation of the resulting fibers are reduced, whereas an intrinsic viscosity of higher than 1.2 deteriorates the productivity due to the occurrence of fiber breakage caused by spinning. The intrinsic viscosity $[\eta]$ can be measured in a 35°C o-chlorophenol solution using an Ostwald viscometer. Further, the melting peak temperature of the polytrimethylene terephthalate, which is determined by DSC in accordance with JIS K7121, is preferably 180°C to 240°C, more preferably 200°C to 235°C. When the melting peak temperature is in a range of 180 to 240°C, high weather resistance is attained, and the bending elastic modulus of the resulting composite fibers can be increased.

As additives in a mixture containing a polyester-based resin, for example, a plasticizer, a softening agent, an antistatic agent, a bulking agent, a matting agent, a heat stabilizer, a light stabilizer, a flame retardant, an antibacterial agent, a lubricant, an antioxidant, an ultraviolet absorber, and/or a crystal nucleating agent can be added within a range that does not impair the effects of the present invention.

In addition, in order to improve the compatibility of the core portion and the sheath portion at their interface, an ionomer in which an olefin-based copolymer containing a monomer of an unsaturated carboxylic acid or an anhydride thereof has a degree of neutralization with a metal salt of 20% or higher can be mixed in a range of 1 to 20 parts by mass.

The polyolefin-based resin (P) which constitutes the core portion and has a melting point of 150°C or higher is, for example, preferably a high-melting-point polyolefin-based resin, particularly preferably a polypropylene resin, more preferably a crystalline homopolypropylene polymer, still more preferably an isotactic polypropylene.

In the core-sheath type composite fibers (C) of the present invention, the core portion is constituted by a high-melting-point resin having a melting point of 150°C or higher, and this core portion does not melt even in a rubber vulcanization process. When 15-minute vulcanization was performed at 195°C, which is higher than the temperature used in ordinary industrial vulcanization conditions, and the cross-section of a cord embedded in the thus vulcanized rubber was observed, it was found that, although the low-melting-point olefin-based polymer of the sheath portion was melted and its originally circular cross-section was deformed, the high-melting-point resin of the core portion maintained the circular cross-sectional shape of the core portion after core-sheath composite spinning and was not melted completely into a melt, and a fiber breaking strength of not less than 150 N/mm$^2$ was maintained as well.

In this manner, as long as the melting point of the resin constituting the core portion of a cord is 150°C or higher, the core-sheath fibers are not melted or broken even when the cord is subjected to a 195°C heating treatment during vulcanization of a rubber article, and the expected effects of the present invention can thus be attained. The reason why the cord exhibited such heat resistance that allows the cord to maintain its material strength even at a processing temperature higher than the intrinsic melting point of the resin as described above is believed to be because the melting point was increased to be higher than the intrinsic melting point of the resin since the cord was embedded in the rubber and, therefore, when the cord was vulcanized at a fixed length, a condition of fixed-length restriction where fiber shrinkage does not occur, which is different from a method of measuring the melting point without restricting the resin shape as in JIS K7121 and the like, was created. It is known that, as a thermal phenomenon in a situation unique to fiber materials, the melting point is sometimes increased under such a measurement condition of "fixed-length restriction" where fiber shrinkage does not occur (Handbook of Fibers 2nd Edition, March 25, 1994; edited by The Society of Fiber Science and Technology, Japan; published by Maruzen Co., Ltd.; page 207, line 13). With regard to this phenomenon, the melting point of a substance is represented by a formula "Tm = ΔHm/ΔSm" and, in this formula, the crystallization degree and the equilibrium melting enthalpy (ΔHm) do not change for the same fiber resin. However, it has been considered that, when a tension is applied in the cord direction at a fixed length (or the cord is thus stretched) and thermal shrinkage of the cord during melting is inhibited, since melting hardly induces orientational relaxation of the molecular chains oriented along the cord direction, the melting enthalpy (ΔSm) is reduced and the melting point is increased as a result.

As a preferred example of the core-sheath type composite fibers (C) of the present invention, when a polypropylene resin or a PPT resin is used as the resin having a melting point of 150°C or higher that constitutes the core portion, although the resulting cord has a lower modulus than known high-elasticity cords of 66 nylon, polyethylene terephthalate, aramid or the like that are conventionally used as tire cords, the production conditions such as the cord material and the stretching ratio in spinning can be adjusted such that the resulting cord has an intermediate elastic modulus between that of a conventional cord and that of a rubber.

The olefin-based polymer (D) used in the resin material constituting the sheath portion may be a polymer composed of an olefin(s), such as a propylene-$\alpha$-olefin copolymer (H), a propylene-nonconjugated diene copolymer (I), an ionomer (J) in which an olefin-based copolymer containing a monomer of an unsaturated carboxylic acid or an anhydride thereof has a degree of neutralization with a metal salt of 20% or higher, and/or an olefin-based homopolymer (K).

In the propylene-$\alpha$-olefin random copolymer (H), any known $\alpha$-olefin monomer can be used as a comonomer copolymerized with propylene. Monomers that can be used as the comonomer are not restricted to a single kind, and preferred comonomers also include multi-component copolymers in which two or more kinds of monomers are used as in terpolymers. Further, other monomer(s) copolymerizable with polypropylene may be incorporated in a range of, for example, 5% by mole or less, as long as the intended effects of the present invention can be attained. Preferred examples of such propylene-$\alpha$-olefin random copolymer (H) include propylene-ethylene random copolymers, propylene-ethylene-butene random copolymers, and butene-propylene random copolymers, among which a propylene-ethylene random copolymer is most preferred.

Examples of the $\alpha$-olefin include those having 2 or 4 to 20 carbon atoms, specifically, linear or branched $\alpha$-olefins, such as ethylene, 1-butene, 1-pentene, 1-hexene, 1-octene, 1-heptene, 4-methyl-pentene-1, 4-methyl-hexene-1, and 4,4-dimethylpentene-1; and cyclic olefins, such as cyclopentene, cyclohexene, and cycloheptene. These $\alpha$-olefins may be used individually, or in combination of two or more thereof. Thereamong, ethylene, 1-butene, 4-methyl-1-pentene, 1-hexene and 1-octene are preferred, and ethylene and 1-butene are particularly preferred.

The propylene content in the above-described propylene-$\alpha$-olefin random copolymer is preferably 20 to 99.7% by mole, more preferably 75 to 99.5% by mole, still more preferably 95 to 99.3% by mole. A propylene content of less than 20% by mole may lead to insufficient impact resistance strength due to, for example, generation of a polyethylene crystal component. Meanwhile, a propylene content of 75% by mole or higher is generally preferred since it improves the spinnability. Further, when the propylene content is 99.7% by mole or less, addition polymerization of other monomer such as ethylene that copolymerizes with polypropylene leads to an increased molecular chain randomness, so that a cord that is easily thermally fusible is obtained. Moreover, the ethylene content is preferably 0.3% by mole to 80% by mole. When the ethylene content is higher than 80% by mole, the sheath portion does not have sufficient fracture resistance in the fusion thereof with an adherend rubber, and a crack is thus generated in the sheath portion, making fracture more likely to occur, which is not preferred. Meanwhile, when the ethylene content is 5% or less, the fusibility of the sheath resins coming into contact with each other during spinning is reduced, so that preferred spinnability is attained. Further, when the ethylene content is less than 0.3% by mole, since disturbance of the molecular chain orientation caused by addition polymerization of the ethylene monomer with a polymer composed of polypropylene is reduced and the crystallinity is consequently increased, the thermal fusibility of the resins of the sheath portion is deteriorated.

The propylene-$\alpha$-olefin copolymer (H) is preferably a random copolymer in which the block content, which is determined by NMR measurement of a repeating unit of the same vinyl compound moiety, is 20% or less of all aromatic vinyl compound moieties. The reason why such a random copolymer is preferred is because, when the propylene-$\alpha$-olefin copolymer (H) has a low crystallinity and is less oriented, the fusibility attributed to the compatibility of its molecular chain with an adhered rubber component having low orientation is likely to be obtained at the time of heating.

The propylene-nonconjugated diene copolymer (I) can be obtained by polymerizing propylene with a known nonconjugated diene. Monomers that can be used as a comonomer are not restricted to a single kind, and preferred comonomers also include multi-component copolymers in which two or more kinds of monomers are used as in terpolymers. Further, other monomer(s) copolymerizable with polypropylene may be incorporated in a range of, for example, 5% by mole or less as long as the intended effects of the present invention can be attained, and the propylene-nonconjugated diene copolymer (I) also encompasses polymers containing such monomers. Preferred examples thereof include 1-butene-propylene copolymers.

Examples of a nonconjugated diene monomer include 5-ethylidene-2-norbornene, dicyclopentadiene, 1,4-hexadiene, cyclooctadiene, 5-vinyl-2-norbornene, 4,8-dimethyl-1,4,8-decatriene, and 4-ethylidene-8-methyl-1,7-nonadiene. Particularly, it is preferred to introduce a nonconjugated diene to ethylene and propylene as a third component since, in such a case, a component that is adhesive at the interface with an adherend rubber and has co-vulcanizability with sulfur is incorporated by the introduction of a component of an ethylene-propylene-diene copolymer (EPDM). For example, as the propylene-nonconjugated diene copolymer (I), an ethylene-propylene-diene copolymer containing 5-ethylidene-2-norbornene as a diene component can be preferably used.

The propylene content in the propylene-nonconjugated diene copolymer (I) is preferably 20 to 99.7% by mole, more preferably 30 to 75% by mole, still more preferably 40 to 60% by mole. When the propylene content is less than 20% by mole, a blocking phenomenon that the resins of the sheath portion of the cord adhere with each other is likely to occur after spinning. Further, when the propylene content is 30% by mole or less, friction on the surface during spinning is likely to cause disturbance of the sheath resin surface. Meanwhile, when the propylene content is 99.7% by mole or higher and the content of other monomer(s) copolymerized with the polypropylene is thus small, since the molecular chain randomness is reduced and the crystallinity of the polypropylene is increased, the resulting cord has low fusibility. Further, a nonconjugated diene monomer content of higher than 80% by mole is not preferred since this makes the fracture resistance of the sheath portion insufficient in the fusion of the sheath portion with an adherend rubber, and a crack is thus generated in the sheath portion, making fracture more likely to occur. Moreover, when the ethylene content is less than 0.3% by mole, the compatibility with an adherend rubber and the improvement in adhesion that is attributed to co-vulcanization are reduced.

As the ionomer (J) in which an olefin-based copolymer containing a monomer of an unsaturated carboxylic acid or an anhydride thereof has a degree of neutralization with a metal salt of 20% or higher, an ionomer obtained by neutralizing, with a metal, some or all of the carboxyl groups of, for example, an ethylene-ethylenically unsaturated carboxylic acid copolymer or a modification product of a polyolefin with an unsaturated carboxylic acid can be used. Examples of the metal species constituting such an ionomer include monovalent metals, such as lithium, sodium, and potassium; and polyvalent metals, such as magnesium, calcium, zinc, copper, cobalt, manganese, lead, and iron. These metal species can be used individually, or in combination of two or more thereof. Thereamong, the metal species is preferably sodium, magnesium, calcium or zinc, particularly preferably sodium or zinc. For the use in the resin material (B) of the sheath portion, an ionomer obtained by neutralizing an ethylene-ethylenically unsaturated carboxylic acid copolymer with a metal salt at a degree of 20% or higher is preferred. The reason for this is because once the resin material of the sheath portion generates a proton $H^+$-donating acidic atmosphere due to its functional group such as a carboxylic acid group, since a polyvulcanized product is reduced by protons $H^+$ and thus can no longer be formed even if sulfur migrates from an adherend rubber to the resin material of the sheath portion and is thereby activated, an environment in which strong adhesion with the adherend rubber cannot be attained is likely to be created. The degree of neutralization of the carboxylic acid with the metal salt is preferably 100% or higher; however, since the carboxylic acid is a weak acid, the effects of the present invention can be attained even when the degree of neutralization of the carboxylic acid is 20%. The degree of neutralization of the carboxylic acid is preferably 20% to 250%, more preferably 70% to 150%.

Examples of an ethylenically unsaturated carboxylic acid monomer include vinyl esters, such as vinyl acetate and vinyl propionate; acrylic acid esters, such as methyl acrylate, ethyl acrylate, isopropyl acrylate, *n*-butyl acrylate, isobutyl acrylate, and isooctyl acrylate; methacrylic acid esters, such as methyl methacrylate and isobutyl methacrylate; and maleic acid esters, such as dimethyl maleate and diethyl maleate. Thereamong, methyl acrylate and methyl methacrylate are preferred. As the ionomer (J), for example, an ionomer of an ethylene-methacrylic acid copolymer can be preferably used.

In the present invention, the degree of neutralization is defined by the following formula:

$$\text{Degree of neutralization (\%)} = 100 \times [(\text{Number of moles of cation component in resin component} \times \text{Valence of cation component}) + (\text{Number of moles of metal component in basic inorganic metal compound} \times \text{Valence of metal component})]/(\text{Number of moles of carboxyl group in resin component})$$

The amount of a cation component and that of an anion component can be determined by a method of examining the degree of neutralization of an ionomer, such as neutralization titration.

Examples of the olefin-based homopolymer (K) include ethylene homopolymers, such as high-density polyethylenes, low-density polyethylenes, and linear low-density polyethylenes; propylene homopolymers, such as isotactic polypropylenes, atactic polypropylenes, and syndiotactic polypropylenes; 4-methylpentene-1 homopolymers; 1-butene homopolymers; polybutadienes; polyisoprenes; and polynorbornenes. In the present invention, preferred examples of the olefin-based homopolymer (K) include, but not particularly limited to, high-density polyethylenes and polybutadienes.

Examples of a method of producing these olefin-based copolymer resins include slurry polymerization, vapor-phase polymerization and liquid-phase bulk polymerization, in which an olefin polymerization catalyst such as a Ziegler catalyst or a metallocene catalyst is used and, as a polymerization system, either a batch polymerization system or a continuous polymerization system may be employed.

In the core-sheath type composite fibers (C) of the present invention, as the olefin-based polymer (D) contained in the resin material (B) of the sheath portion, the propylene-$\alpha$-olefin copolymer (H), the propylene-nonconjugated diene copolymer (I), the ionomer (J) in which an olefin-based copolymer containing a monomer of an unsaturated carboxylic acid or an anhydride thereof has a degree of neutralization with a metal salt of 20% or higher, and the olefin-based homopolymer (K) can be used individually, or in combination of two or more thereof.

Further, in the resin material (B) of the sheath portion, at least one selected from a styrene-based elastomer (L) containing a monomolecular chain in which mainly styrene monomers are arranged in series, a vulcanization accelerator (M), a vulcanization accelerating aid (N) and a filler (O) can be incorporated along with the olefin-based polymer (D).

In the core-sheath type composite fibers (C) of the present invention, it is preferred that the resin material constituting the sheath portion further contain, as a compatibilizer, the styrene-based elastomer (L) containing a monomolecular chain in which mainly styrene monomers are arranged in series. By incorporating the styrene-based elastomer (L), the compatibility between the resin material and a rubber is improved, so that their adhesion can be improved.

That is, the low-melting-point resin material is a composition containing, as a main component, a polyolefin-based resin such a homopolymer (e.g., a polyethylene or a polypropylene) or an ethylene-propylene random copolymer, which is a resin composition having the melting point range defined for the core-sheath type composite fibers (C) of the present invention, and it is generally known that a mixed resin composition thereof has a phase-separated structure. Therefore, by adding the styrene-based elastomer (L) as a block copolymer composed of a soft segment and a hard segment, compatibilization of the phases at their interface can be facilitated. The styrene-based elastomer (L) preferably contains a segment which shows adhesiveness at the interface between a high-melting-point resin that is a core component and a resin material that is a sheath component and interacts with the molecular structure of a styrene-butadiene rubber (SBR), a butadiene rubber (BR), a butyl rubber (IIR), a polyisoprene structure-containing natural rubber (IR) or the like that is contained in the sheath component and an adherend rubber, since such a styrene-based elastomer improves the adhesion with the adherend rubber. Particularly, when the adherend rubber contains a styrene-butadiene rubber (SBR), it is preferred to incorporate a styrene component-containing styrene-based block copolymer into the sheath component since this improves the compatibility of the sheath portion with the adherend rubber at their interface in fusion and the adhesive strength is thereby improved. It is noted here that, in the present invention, the term "block copolymer" refers to a copolymer composed of two or more kinds of monomer units, in which mainly at least one of the monomer units is arranged in a long continuous series to form a monomolecular chain (block). Further, the term "styrene-based block copolymer" refers to a block copolymer that contains a block in which mainly styrene monomers are connected and arranged in a long series.

As the styrene-based elastomer (L), specifically, a styrene-based block copolymer can be used, and one which contains styrene and a conjugated diolefin compound is preferred. More specific examples of the styrene-based elastomer (L) include styrene-butadiene-based polymers, polystyrene-poly(ethylene/propylene)-based block copolymers, styrene-isoprene-based block polymers, and completely or partially hydrogenated polymers that are obtained by hydrogenation of a double bond(s) of a block copolymer of styrene and butadiene. Further, the styrene-based elastomer may be modified with maleic acid.

Specific examples of the styrene-butadiene-based polymers include styrene-butadiene polymers (SBS), styrene-ethylene-butadiene copolymers (SEB), styrene-ethylene-butadiene-styrene copolymers (SEBS), styrene-butadiene-butylene-styrene copolymers (SBBS), partially hydrogenated styrene-isoprene-butadiene-styrene copolymers, and hydrogenation products of block copolymers having a styrene block on both terminals and a block composed of a random copolymer of styrene and butadiene in the main chain, such as S.O.E. manufactured by Asahi Kasei Chemicals Corporation. Examples of the polystyrene-poly(ethylene/propylene)-based block copolymers include polystyrene-poly(ethylene/propylene) block copolymers (SEP), polystyrene-poly(ethylene/propylene) block-polystyrene (SEPS), polystyrene-poly(ethylene/butylene) block-polystyrene (SEBS), and polystyrene-poly(ethylene-ethylene/propylene) block-polystyrene (SEEPS). Examples of the styrene-isoprene-based block polymers include polystyrene-polyisoprene-polystyrene copolymers (SIS) and polystyrene-polyisobutylene-polystyrene block copolymers (SIBS). In the present invention, among these copolymers, a styrene-isoprene copolymer, a styrene-butadiene polymer, a styrene-butadiene-butylene-styrene copolymer, and a styrene-ethylene-butadiene-styrene copolymer can be suitably used from the standpoints of adhesion and compatibility with rubber. Further, in cases where the adherend rubber is a composition composed of a low-polarity rubber such as BR, SBR or NR, a styrene-based block copolymer or a hydrogenation product thereof is preferred since superior compatibility is attained when the copolymer has no high-polarity functional group introduced by modification or the like.

When modification is performed to further introduce a polar group into a hydrogenation product of a styrene-butadiene polymer, the modification can be performed by introducing an amino group, a carboxyl group or an acid anhydride group into the hydrogenation product. Such modification is not particularly restricted; however, in the present invention, the modification of introducing a polar group is preferably, for example, modification based on introduction of an unsaturated amino group using 3-lithio-1-[*N,N*-bis(trimethylsilyl)]aminopropane, 2-lithio-1-[*N,N*-bis(trimethylsilyl)]aminoethane, 3-lithio-2,2-dimethyl-1-[*N,N*-bis(trimethylsilyl)]aminopropane or the like.

The content of the styrene-based elastomer (L) may be 0.1 to 30 parts by mass, particularly 1 to 15 parts by mass, with respect to a total of 100 parts by mass of the resin components such as an olefin-based polymer that are contained in the resin material constituting the sheath portion. By controlling the content of the styrene-based elastomer (L) in the above-described range, an effect of improving the compatibility between the resin material and a rubber can be favorably attained. The styrene-based elastomers (L) has no crystal structure for being an elastomer and consists of only amorphous moieties; therefore, there is no melting point at which the styrene-based elastomer (L) shows fluidity due to disturbance of a crystalline moiety by heating/warming of the polymer. Accordingly, an adhered rubber that is similarly amorphous can attain fluidity with heat even if, as in the case of the olefin-based polymer (D) exhibiting a common melting behavior, the adhered rubber is not heated/warmed to the melting point of the polymer or higher so as to disturb the crystalline moiety of a high-molecular-weight chain and thereby impart fluidity. Since the styrene-based elastomer (L) of the present invention is a component that improves the compatibility of a polymer with an adherend rubber, when the styrene-based elastomer (L) is incorporated into the resin material (B) and the olefin-based polymer (D) is fluidized by heat, the compatibility with the adherend rubber is improved, whereby the fusibility of the adherend rubber and the resin material (B) can be further improved.

In the core-sheath type composite fibers (C) of the present invention, the resin material constituting the sheath portion may further contain a vulcanization accelerator (M). By incorporating the vulcanization accelerator (M), interaction takes place at the rubber interface due to an effect of bringing the sulfur component contained in an adherend rubber into a transition state between the vulcanization accelerator and a polyvulcanized product, and the amount of sulfur migrating from the rubber to the surface of the resin of the sheath portion or into the resin is increased. Further, when a conjugated diene that can be vulcanized with sulfur is contained as a component of the resin of the sheath portion, co-reaction with the adherend rubber is facilitated, so that the adhesion of the resin material and the rubber can be further improved.

The vulcanization accelerator is, for example, a Lewis base compound, examples of which include basic silica; primary, secondary and tertiary amines; organic acid salts of these amines, as well as adducts and salts thereof; aldehyde ammonia-based accelerators; and aldehyde amine-based accelerators. Examples of other vulcanization accelerators include sulfenamide-based accelerators, guanidine-based accelerators, thiazole-based accelerators, thiuram-based accelerators and dithiocarbamic acid-based accelerators, which can activate sulfur by, for example, ring-opening a cyclic sulfur when sulfur atoms of these vulcanization accelerators come close thereto in the system to convert the sulfur into a transition state and thereby generating an active vulcanization accelerator-polyvulcanized product complex.

The Lewis base compound is not particularly restricted as long as it is a compound that is a Lewis base in the definition of Lewis acid base and can donate an electron pair. Examples thereof include nitrogen-containing compounds having a lone electron pair on a nitrogen atom and, specifically, among those vulcanization accelerators known in the rubber industry, a basic compound can be used.

Specifically, the basic compound is, for example, an aliphatic primary, secondary or tertiary amine having 5 to 20 carbon atoms, examples of which include: acyclic monoamines, such as alkylamines (e.g., n-hexylamine, octylamine, coconut amine, laurylamine, 1-aminooctadecane, oleylamine, and tallow amine), dialkylamines (e.g., dibutylamine, distearylamine, and di(2-ethylhexyl)amine) and trialkylamines (e.g., tributylamine, trioctylamine, dimethyl coconut amine, dimethyldecylamine, dimethyllaurylamine, dimethylmirystylamine, dimethylpalmitylamine, dimethylstearylamine, dimethylbehenylamine, and dilaurylmonomethylamine), as well as derivatives and salts thereof; acyclic polyamines, such as ethylene diamine, tallow propylene diamine, diethylene triamine, triethylene tetramine, tetraethylene pentamine, pentaethylene hexamine, hexamethylene diamine and polyethylene imine, as well as derivatives and salts thereof; alicyclic polyamines such as cyclohexylamine, as well as derivatives and salts thereof; alicyclic polyamines such as hexamethylene tetramine, as well as derivatives and salts thereof; aromatic monoamines, such as aniline, alkylaniline, diphenylaniline, 1-naphthylaniline and *N*-phenyl-1-naphthylamine, as well as derivatives and salts thereof; and aromatic polyamine compounds, such as phenylene diamine, diaminotoluene, N-alkylphenylene diamine, benzidine, guanidines and *n*-butylaldehyde aniline, as well as derivatives thereof. Examples of the guanidines include 1,3-diphenylguanidine, 1,3-di-o-tolylguanidine, 1-*o*-tolylbiguanide, di-o-tolylguanidine salt of dicatechol borate, 1,3-di-o-cumenylguanidine, 1,3-di-*o*-biphenylguanidine, and 1,3-di-*o*-cumenyl-2-propionylguanidine. Thereamong, 1,3-diphenylguanidine is preferred because of its high reactivity.

Examples of an organic acid that forms a salt with the above-described amines include carboxylic acid, carbamic acid, 2-mercaptobenzothiazole, and dithiophosphoric acid. Examples of a substance that forms an adduct with the above-described amines include alcohols and oximes. Specific examples of an organic acid salt or adduct of the amines include n-butylamine acetate, dibutylamine oleate, hexamethylenediamine carbamate, and dicyclohexylamine salt of 2-mercaptobenzothiazole.

Examples of a nitrogen-containing heterocyclic compound that shows basicity by having a lone electron pair on a nitrogen atom include: monocyclic nitrogen-containing compounds, such as pyrazole, imidazole, pyrazoline, imidazoline, pyridine, pyrazine, pyrimidine and triazine, as well as derivatives thereof; and bicyclic nitrogen-containing compounds, such as benzimidazole, purine, quinoline, pteridin, acridine, quinoxaline and phthalazine, as well as derivatives thereof. Examples of a heterocyclic compound having a heteroatom other than a nitrogen atom include heterocyclic compounds containing nitrogen and other heteroatom, such as oxazoline and thiazoline, as well as derivatives thereof.

Specific examples of other vulcanization accelerators include known vulcanization accelerators, such as thioureas, thiazoles, sulfenamides, thiurams, dithiocarbamates, and xanthates.

Examples of the thioureas include *N,N'*-diphenyl thiourea, trimethyl thiourea, *N,N'*-diethyl thiourea, *N,N'*-dimethyl thiourea, *N,N'*-dibutyl thiourea, ethylene thiourea, *N,N'*-diisopropyl thiourea, *N,N'*-dicyclohexyl thiourea, 1,3-di(*o*-tolyl)thiourea, 1,3-di(p-tolyl)thiourea, 1,1-diphenyl-2- thiourea, 2,5-dithiobiurea, guanyl thiourea, 1-(1-naphthyl)-2-thiourea, 1-phenyl-2-thiourea, *p*-tolyl thiourea, and o-tolyl thiourea. Thereamong, *N,N'*-diethyl thiourea, trimethyl thiourea, *N,N'*-diphenyl thiourea, and *N,N*-dimethyl thiourea are preferred because of their high reactivity.

Examples of the thiazoles include 2-mercaptobenzothiazole, di-2-benzothiazolyl disulfide, zinc salt of 2-mercaptobenzothiazole, cyclohexylamine salt of 2-mercaptobenzothiazole, 2-(*N,N*-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazole, 2-mercapto-6-nitrobenzothiazole, 2-mercapto-naphtho[1,2-d]thiazole, 2-mercapto-5-methoxybenzothiazole, and 6-amino-2-mercaptobenzothiazole. Thereamong, 2-mercaptobenzothiazole, di-2-benzothiazolyl disulfide, zinc salt of 2-mercaptobenzothiazole, cyclohexylamine salt of 2-mercaptobenzothiazole, and 2-(4'-morpholinodithio)benzothiazole are preferred because of their high reactivity. Further, for example, di-2-benzothiazolyl disulfide and zinc salt of 2-mercaptobenzothiazole are particularly preferred since they are highly soluble even when added to a relatively nonpolar polymer and are, therefore, unlikely to induce a reduction in spinnability and the like caused by deterioration of the surface properties due to precipitation or the like.

Examples of the sulfenamides include *N*-cyclohexyl-2-benzothiazolyl sulfenamide, *N,N*-dicyclohexyl-2-benzothiazolyl sulfenamide, *N-tert*-butyl-2-benzothiazolyl sulfenamide, *N*-oxydiethylene-2-benzothiazolyl sulfenamide, *N*-methyl-2-benzothiazolyl sulfenamide, *N*-ethyl-2-benzothiazolyl sulfenamide, *N*-propyl-2-benzothiazolyl sulfenamide, *N*-butyl-2-benzothiazolyl sulfenamide, *N*-pentyl-2-benzothiazolyl sulfenamide, *N*-hexyl-2-benzothiazolyl sulfenamide, *N*-pentyl-2-benzothiazolyl sulfonamide, *N*-octyl-2-benzothiazolyl sulfenamide, *N*-2-ethylhexyl-2-benzothiazolyl sulfenamide, *N*-decyl-2-benzothiazolyl sulfenamide, *N*-dodecyl-2-benzothiazolyl sulfenamide, *N*-stearyl-2-benzothiazolyl sulfenamide, *N,N*-dimethyl-2-benzothiazolyl sulfenamide, *N,N*-diethyl-2-benzothiazolyl sulfenamide, *N,N*-dipropyl-2-benzothiazolyl sulfenamide, *N,N*-dibutyl-2-benzothiazolyl sulfenamide, *N,N*-dipentyl-2-benzothiazolyl sulfenamide, *N,N*-dihexyl-2-benzothiazolyl sulfenamide, *N,N*-dipentyl-2-benzothiazolyl sulfenamide, *N,N*-dioctyl-2-benzothiazolyl sulfenamide, *N,N*-di-2-ethylhexylbenzothiazolyl sulfenamide, *N*-decyl-2-benzothiazolyl sulfenamide, *N,N*-didodecyl-2-benzothiazolyl sulfenamide, and *N,N*-distearyl-2-benzothiazolyl sulfenamide. Thereamong, *N*-cyclohexyl-2-benzothiazolyl sulfenamide, *N*-tert-butyl-2-benzothiazolyl sulfenamide, and *N*-oxydiethylene-2-benzothiazole sulfenamide are preferred because of their high reactivity. Further, for example, *N*-cyclohexyl-2-benzothiazolyl sulfenamide and *N*-oxydiethylene-2-benzothiazolyl sulfenamide are particularly preferred since they are highly soluble even when added to a relatively nonpolar polymer and are, therefore, unlikely to induce a reduction in spinnability and the like caused by deterioration of the surface properties due to precipitation or the like.

Examples of the thiurams include tetramethyl thiuram disulfide, tetraethyl thiuram disulfide, tetrapropyl thiuram disulfide, tetraisopropyl thiuram disulfide, tetrabutyl thiuram disulfide, tetrapentyl thiuram disulfide, tetrahexyl thiuram disulfide, tetraheptyl thiuram disulfide, tetraoctyl thiuram disulfide, tetranonyl thiuram disulfide, tetradecyl thiuram disulfide, tetradodecyl thiuram disulfide, tetrastearyl thiuram disulfide, tetrabenzyl thiuram disulfide, tetrakis(2-ethylhexyl) thiuram disulfide, tetramethyl thiuram monosulfide, tetraethyl thiuram monosulfide, tetrapropyl thiuram monosulfide, tetraisopropyl thiuram monosulfide, tetrabutyl thiuram monosulfide, tetrapentyl thiuram monosulfide, tetrahexyl thiuram monosulfide, tetraheptyl thiuram monosulfide, tetraoctyl thiuram monosulfide, tetranonyl thiuram monosulfide, tetradecyl thiuram monosulfide, tetradodecyl thiuram monosulfide, tetrastearyl thiuram monosulfide, tetrabenzyl thiuram monosulfide, and dipentamethylene thiuram tetrasulfide. Thereamong, tetramethyl thiuram disulfide, tetraethyl thiuram disulfide, tetrabutyl thiuram disulfide, and tetrakis(2-ethylhexyl) thiuram disulfide are preferred because of their high reactivity. Further, in the case of a polymer that is relatively non-polar, an increase in the amount of an alkyl group contained in the accelerator compound tends to increase the solubility and, since a reduction in spinnability and the like caused by deterioration of the surface properties due to precipitation or the like are thus unlikely to occur, for example, tetrabutyl thiuram disulfide and tetrakis(2-ethylhexyl) thiuram disulfide are particularly preferred.

Examples of the dithiocarbamates include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc *N*-pentamethylene dithiocarbamate, zinc *N*-ethyl-*N*-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper *N*-pentamethylene dithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium *N*-pentamethylene dithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate, ferric di(2-ethylhexyl)dithiocarbamate, ferric didecyldithiocarbamate, ferric didodecyldithiocarbamate, ferric *N*-pentamethylene dithiocarbamate, and ferric dibenzyldithiocarbamate. Thereamong, zinc *N*-ethyl-*N*-phenyldithiocarbamate, zinc dimethyldithiocarbamate, zinc diethyldithiocarbamate, and zinc dibutyldithiocarbamate are desirable because of their high reactivity. Further, in the case of a polymer that is relatively non-polar, an increase in the amount of an alkyl group contained in the accelerator compound tends to increase the solubility and, since a reduction in spinnability and the like caused by deterioration of the surface properties due to precipitation or the like are thus unlikely to occur, for example, zinc dibutyldithiocarbamate is particularly preferred.

Examples of the xanthates include zinc methylxanthate, zinc ethylxanthate, zinc propylxanthate, zinc isopropylxanthate, zinc butylxanthate, zinc pentylxanthate, zinc hexylxanthate, zinc heptylxanthate, zinc octylxanthate, zinc 2-ethylhexylxanthate, zinc decylxanthate, zinc dodecylxanthate, potassium methylxanthate, potassium ethylxanthate, potassium propylxanthate, potassium isopropylxanthate, potassium butylxanthate, potassium pentylxanthate, potassium hexylxanthate, potassium heptylxanthate, potassium octylxanthate, potassium 2-ethylhexylxanthate, potassium decylxanthate, potassium dodecylxanthate, sodium methylxanthate, sodium ethylxanthate, sodium propylxanthate, sodium isopropylxanthate, sodium butylxanthate, sodium pentylxanthate, sodium hexylxanthate, sodium heptylxanthate, sodium octylxanthate, sodium 2-ethylhexylxanthate, sodium decylxanthate, and sodium dodecylxanthate. Thereamong, zinc isopropylxanthate is preferred because of its high reactivity.

The vulcanization accelerator (M) may be used in the form of being preliminarily dispersed in an inorganic filler, an oil, a polymer or the like and incorporated into the sheath-portion resin of the rubber-reinforcing core-sheath fibers. Such vulcanization accelerators and retardants may be used individually, or in combination of two or more thereof.

The content of the vulcanization accelerator (M) can be 0.05 to 20 parts by mass, particularly 0.2 to 5 parts by mass, with respect to a total of 100 parts by mass of the resin components such as an olefin-based polymer contained in the resin material constituting the sheath portion. By controlling the content of the vulcanization accelerator in the above-described range, an effect of improving the adhesion between the resin material and a rubber can be favorably attained.

In the resin material constituting the sheath portion, for the purpose of, for example, improving the adhesion at the interface with an adherend rubber composition, a thermoplastic rubber cross-linked with a polypropylene-based copolymer (TPV), any of "other thermoplastic elastomers (TPZ)" in the classification of thermoplastic elastomers described in JIS K6418, or the like may be incorporated in addition to the above-described components. These components enable to finely disperse a partially or highly cross-linked rubber into a continuous phase of the matrix of a thermoplastic resin composition of the resin material. Examples of the cross-linked thermoplastic rubber include acrylonitrile-butadiene rubbers, natural rubbers, epoxidized natural rubbers, butyl rubbers, and ethylene-propylene-diene rubbers. Examples of the "other thermoplastic elastomers (TPZ)" include syndiotactic-1,2-polybutadiene resins and *trans*-polyisoprene resins.

In the above-described high-melting-point resin and olefin-based polymer, in order to add other properties such as oxidation resistance, an additive(s) normally added to a resin can also be incorporated within a range that does not markedly impair the effects of the present invention and the working efficiency in spinning and the like. As such additional components, various conventionally known additives that are used as additives for polyolefin resins, examples of which include a nucleating agent, an antioxidant, a neutralizer, a light stabilizer, a process oil, an ultraviolet absorber, a lubricant, an antistatic agent, a filler (O), a metal deactivator, a peroxide, an anti-microbial fungicide, a fluorescence whitener and a vulcanization accelerating aid (N) used as an additive for rubber compositions, as well as other additives can be used.

Examples of the vulcanization accelerating aid (N) include basic inorganic metal compounds, such as formates, acetates, nitrates, carbonates, bicarbonates, oxides, hydroxides, and alkoxides of monovalent metals (e.g., lithium, sodium, and potassium), polyvalent metals (e.g., magnesium, calcium, zinc, copper, cobalt, manganese, lead, and iron) and the like. Specific examples thereof include metal hydroxides, such as magnesium hydroxide, calcium hydroxide, sodium hydroxide, lithium hydroxide, potassium hydroxide, and copper hydroxide; metal oxides, such as magnesium oxide, calcium oxide, zinc oxide (zinc white), and copper oxide; and metal carbonates, such as magnesium carbonate, calcium carbonate, sodium carbonate, lithium carbonate, and potassium carbonate. Thereamong, a metal oxide or a metal hydroxide is preferred as an alkali metal salt, and magnesium hydroxide or zinc oxide is particularly preferred.

Examples of the filler (O) include inorganic particulate carriers, such as alumina, silica alumina, magnesium chloride, calcium carbonate and talc, as well as smectites, vermiculites and micas, such as talc, montmorillonite, sauconite, beidellite, nontronite, saponite, hectorite, stevensite, bentonite and taeniolite; and porous organic carriers, such as polypropylenes, polyethylenes, polystyrenes, styrene-divinylbenzene copolymers, and acrylic acid-based copolymers. These fillers can be incorporated for reinforcement of the sheath portion when, for example, the sheath portion does not have sufficient fracture resistance and a crack is thus generated in the sheath portion to cause fracture during fusion of the sheath portion with an adherend rubber. Examples of a carbon black include furnace blacks, such as SAF carbon black, SAF-HS carbon black, ISAF carbon black, ISAF-HS carbon black, and ISAF-LS carbon black.

Examples of the nucleating agent include sodium 2,2-methylene-bis(4,6-di-*t*-butylphenyl)phosphate, talc, sorbitol compounds such as 1,3,2,4-di(p-methylbenzylidene)sorbitol, and aluminum hydroxy-di(*t*-butyl)benzoate.

Examples of the antioxidant include phenolic antioxidants, such as tris-(3,5-di-*t*-butyl-4-hydroxybenzyl)isocyanurate, 1,1,3-tris(2-methyl-4-hydroxy-5-*t*-butylphenyl)butane, octadecyl-3-(3,5-di-*t*-butyl-4-hydroxyphenyl)propionate, pentaerythritol-tetrakis{3-(3,5-di-*t*-butyl-4-hydroxyphenyl)propionate}, 1,3,5-trimethyl-2,4,6-tris(3,5-di-*t*-butyl-4-hydroxybenzyl)benzene, 3,9-bis[2-{3-(3-*t*-butyl-4-hydroxy-5-methylphenyl)propionyloxy}-1,1-dimethylethyl]-2,4,8,10-tetraoxaspiro[5,5]undecane, and 1,3,5-tris(4-*t*-butyl-3-hydroxy-2,6-dimethylbenzyl)isocyanuric acid.

Examples of a phosphorus-based antioxidant include tris(mixed-, mono-, or dinonylphenyl phosphite), tris(2,4-di-*t*-butylphenyl)phosphite, 4,4'-butylidene-bis(3-methyl-6-*t*-butylphenyl-di-tridecyl)phosphite, 1,1,3-tris(2-methyl-4-di-tridecylphosphite-5-*t*-butylphenyl)butane, bis(2,4-di-*t*-butylphenyl)pentaerythritol diphosphite, tetrakis(2,4-di-*t*-butylphenyl)-4,4'-biphenylene diphosphonite, tetrakis(2,4-di-*t*-butyl-5-methylphenyl)-4,4'-biphenylene diphosphonite, and bis(2,6-di-*t*-butyl-4-methylphenyl)pentaerythritol diphosphite. Examples of a sulfur-based antioxidant include distearyl thiodipropionate, dimyristyl thiodipropionate, and pentaerythritol tetrakis(3-lauryl thiopropionate).

Examples of the neutralizer include calcium stearate, zinc stearate, and hydrotalcite.

Examples of a hindered amine-based stabilizer include polycondensates of dimethyl succinate and 1-(2-hydroxyethyl)-4-hydroxy-2,2,6,6-tetramethylpiperidine, tetrakis(1,2,2,6,6-pentamethyl-4-piperidyl)-1,2,3,4-butane tetracarboxylate, bis(1,2,2,6,6-pentamethyl-4-piperidyl)sebacate, *N,N*-bis(3-aminopropyl)ethylenediamine-2,4-bis{*N*-butyl-*N*-(1,2,2,6,6-pentamethyl-4-piperidyl)amino}-6-chloro-1,3,5-triazine condensate, bis(2,2,6,6-tetramethyl-4-piperidyl)sebacate, poly[{6-(1,1,3,3-tetramethylbutyl)imino-1,3,5-triazine-2,4-diyl} {(2,2,6,6-tetramethyl-4-piperidyl)imino}hexamethylene{2,2,6,6-tetramethyl-4-piperidyl}imino], and poly [(6-morpholino-s-triazine-2,4-diyl)[(2,2,6,6-tetramethyl-4-piperidyl)imino]hexamethylene{(2,2,6,6-tetramethyl-4-piperidyl)imino}].

Examples of the lubricant include higher fatty acid amides, such as oleic acid amide, stearic acid amide, behenic acid amide, and ethylene bis-stearylamide; silicone oil; and higher fatty acid esters.

Examples of the antistatic agent include higher fatty acid glycerol esters, alkyl diethanolamines, alkyl diethanolamides, and alkyl diethanolamide fatty acid monoesters.

Examples of the ultraviolet absorber include 2-hydroxy-4-*n*-octoxybenzophenone, 2-(2'-hydroxy-3',5'-di-*t*-butylphenyl)-5-chlorobenzotriazole, and 2-(2'-hydroxy-3'-*t*-butyl-5'-methylphenyl)-5-chlorobenzotriazole.

Examples of the process oil include paraffinic process oils, naphthenic process oils, aromatic process oils, rosin-based process oils, and natural vegetable process oils. The process oil is preferably, for example, a naphthenic process oil, or a mixture of a naphthenic process oil and a straight asphalt.

Examples of the light stabilizer include *n*-hexadecyl-3,5-di-*t*-butyl-4-hydroxybenzoate, 2,4-di-*t*-butylphenyl-3',5'-di-t-butyl-4'-hydroxybenzoate, bis(2,2,6,6-tetramethyl-4-piperidyl)sebacate, dimethyl succinate-2-(4-hydroxy-2,2,6,6-tetramethyl-1-piperidyl)ethanol condensate, poly{6-[(1,1,3,3-tetramethylbutyl)amino]-1,3,5-triazine-2,4-diyl][(2,2,6,6-tetramethyl-4-piperidyl)imino]hexamethylene[(2,2,6,6-tetramethyl-4-piperidyl)imino]}, and *N,N'*-bis(3-aminopropyl)ethylenediamine-2,4-bis[*N*-butyl-*N*-(1,2,2,6,6-pentamethyl-4-piperidyl)amino]-6-chloro-1,3,5-triazine condensate.

Particularly, from the standpoint of the combination of the core portion and the sheath portion, it is preferred to use, as the same olefin-based resins, a high-melting-point polyolefin-based resin for the core portion and a low-melting-point polyolefin-based resin for the sheath portion, since good compatibility is thereby attained between the core portion and the sheath portion. By using an olefin-based resin for both the core portion and the sheath portion, a high bonding strength is attained at the core-sheath polymer interface and sufficient peeling resistance is provided against interfacial peeling between the core portion and the sheath portion, which are different from a case where different kinds of resins are used for the core portion and the sheath portion; therefore, the resultant can sufficiently exhibit properties as a composite fiber over a long period of time. Specifically, it is preferred to use a crystalline propylene homopolymer having a melting point of 150°C or higher as the high-melting-point polyolefin-based resin of the core portion and to use a polypropylene-based copolymer resin obtained by copolymerization of a polypropylene and a component copolymerizable with the polypropylene, such as an ethylene-propylene copolymer or an ethylene-butene-propylene ternary copolymer, particularly an ethylene-propylene random copolymer, as the low-melting-point polyolefin-based resin of the sheath portion. The high-melting-point polyolefin-based resin of the core portion is particularly preferably an isotactic polypropylene since it provides good fiber-forming properties and the like in spinning.

In this case, the melt flow index (melt flow rate: MFR) (MFR1) of the high-melting point polyolefin-based resin and the melt flow index (MFR2) of the low-melting-point polyolefin-based resin are not particularly restricted as long as they are in a range where these resins can be spun; however, the melt flow indices are preferably 0.3 to 100 g/10 min. The same applies to the melt flow index of the high-melting-point resin used in the core portion other than the high-melting point polyolefin-based resin.

Particularly, the melt flow index (MFR1) of the high-melting-point resin containing the high-melting point polyolefin-based resin can be selected to be in a range of preferably 0.3 to 18 g/10 min, particularly preferably 0.5 to 15 g/10 min, more preferably 1 to 10 g/10 min. The reason for this is because, with the MFR of the high-melting-point resin being in the above-described range, favorable spinning take-up and stretching properties are attained, and a melt of the high-melting-point resin of the core portion is prevented from being fluidized under the heating of the vulcanization step in the production of a rubber article, allowing the resultant to maintain a cord form.

The melt flow index (MFR2) of the low-melting-point polyolefin-based resin is preferably 5 g/10 min or higher, particularly preferably 5 to 70 g/10 min, more preferably 10 to 30 g/10 min. In order to improve the thermal fusibility of the low-melting-point polyolefin-based resin of the sheath portion, a resin having a high MFR is preferably used since such a resin is likely to flow into and fill gaps with an adherend rubber. On the other hand, in cases where other reinforcing member (e.g., a ply cord or a bead core) is provided in the vicinity of where the composite fibers are arranged and the rubber covering the composite fibers has an unintended void, an excessively high MFR2 may cause the molten low-melting-point polyolefin-based resin to wet-spread on the surface of the fiber material of the ply cord; therefore, the MFR2 is particularly preferably not higher than 70 g/10 min. The MFR2 is more preferably not higher than 30 g/10 min since, in this case, when the composite fibers are in contact with each other, such a phenomenon of fiber-fiber fusion in which the molten low-melting-point polyolefin-based wet-spreads and forms aggregated fiber conjugates is less likely to occur. Further, an MFR2 of not higher than 20 g/10 min is still more preferred since it improves the fracture resistance of the resin of the sheath portion at the time of peeling the fused rubber, and the sheath portion is thus strongly adhered with the rubber.

The MFR values (g/10 min) are determined in accordance with JIS K7210, and the melt flow rate of a polypropylene-based resin material and that of a polyethylene-based resin material are measured at a temperature of 230°C under a load of 21.18 N (2,160 g) and at a temperature of 190°C under a load of 21.18 N (2,160 g), respectively.

With regard to the ratio of the core portion and the sheath portion in the core-sheath type composite fibers (C) of the present invention, the ratio of the core portion in the composite fibers (C) is preferably 10 to 95% by mass, more preferably 30 to 80% by mass. When the ratio of the core portion is excessively small, the strength of the composite fibers (C) is reduced and sufficient reinforcing performance may not be attained. The ratio of the core portion is particularly preferably 50% by mass or higher since this can enhance the reinforcing performance. However, when the ratio of the core portion is excessively high, the core portion is likely to be exposed from the composite fibers (C) due to an excessively low ratio of the sheath portion; therefore, sufficient adhesion with a rubber may not be attained.

In the present invention, the form of the core-sheath type composite fibers (C) applied to the reinforcing layer is not particularly restricted; however, the composite fibers (C) are preferably in the form of a monofilament or a cord in which 10 or less monofilaments are bundled, more preferably a monofilament cord. The reason for this is because, if the assembly of the core-sheath type composite fibers (C) of the present invention is in the fiber form of a cord in which more than 10 monofilaments are bundled, a twisted cord, a nonwoven fabric or a textile, since the low-melting-point resin material (B) constituting the sheath portion is melted when the fiber assembly is vulcanized in a rubber, the filaments are fused together and the resulting molten bodies permeate each other, whereby an aggregated foreign material may be formed in a rubber article. When such a foreign material is generated, a crack may develop from the aggregated foreign material in the rubber article due to strain generated by rolling during the use of the tire, and this may cause separation. Accordingly, when the composite fibers (C) form a fiber assembly in the rubber article, since the greater the number of bundled filaments, the less likely the rubber is to permeate between the resulting cords and the more likely an aggregated foreign material is to be formed, it is generally preferred that the number of the filaments to be bundled be 10 or less. Further, in the reinforcing layer, the composite fibers (C) are particularly preferably in the form of a monofilament cord. The reason for this is because, since a monofilament cord has smaller initial elongation than an ordinary twisted cord, the force of restraining the reinforcing layer to a main cord reinforcing layer is further improved to more effectively disperse and suppress the above-described shear strain, whereby the crack-inhibiting effect can be further enhanced.

As for a method of producing the core-sheath type composite fibers (C) of the present invention (monofilament), the composite fibers (C) can be produced by a wet-heating and stretching method using two uniaxial extruders for the core material and the sheath material, along with a core-sheath type composite spinneret. The spinning temperature can be set at 140°C to 330°C, preferably 160 to 220°C, for the sheath component; and at 200 to 330°C, preferably 210°C to 300°C, for the core component. Wet-heating can be carried out using, for example, a wet-heating apparatus at 100°C, or a hot water bath at 55 to 100°C, preferably at 95 to 98°C. From the standpoint of thermal fusibility, it is not preferred to cool the resultant once and then perform re-heating and stretching, since crystallization of the sheath portion is thereby facilitated. The stretching ratio is preferably 1.5 or higher from the standpoint of crystallization of the core portion.

In the core-sheath type composite fibers (C) of the present invention, the fineness, namely the fiber thickness, of the composite fibers (C) is preferably in a range of 50 dtex to 4,000 dtex, more preferably 500 dtex to 1,200 dtex. When the fiber thickness of the reinforcing material is less than 50 dtex, the strength is reduced and the cord is thus likely to be broken. Particularly, in the case of a tire, in order to inhibit cord breakage during the processing of various steps in the production of the tire, the fiber thickness of the reinforcing material is more preferably 500 dtex or greater. The upper limit of the fiber thickness of the reinforcing material is not particularly restricted; however, it is preferably 4,000 dtex or less. The reason for this is because, in the case of a monofilament cord, not only a large fiber thickness leads to a lower spinning speed at the time of spinning and the economic efficiency in the processing is thus deteriorated, but also it is difficult to bend a thread having a large thickness at the time of winding the thread on a winding tool such as a bobbin and this deteriorates the working efficiency. In the present invention, the "fiber thickness" means a fiber size (in accordance with JIS L0101) determined for a monofilament itself in the case of a monofilament.

One of the characteristic features of the monofilament cord composed of the core-sheath type composite fibers (C) of the present invention is that it is highly adhesive with a rubber even when the composite fibers (C) have a single fiber thickness of 50 dtex or greater. With the fiber thickness of the composite fibers (C) being less than 50 dtex, a problem in adhesion with a rubber is unlikely to occur even when the fibers are not adhered by an adhesive composition or through fusion between the fiber resin and a rubber. The reason for this is because, since a small single fiber diameter makes the cord-cutting stress smaller than the force that causes peeling of the adhered parts, the cord is broken before the cord and a rubber are detached at their interface when the adhesiveness is evaluated by peeling or the like. This phenomenon is also called "fluff adhesion" and can be observed at a single fiber thickness of less than 50 dtex, which is equivalent to the fluff thickness.

Further, in the tire of the present invention, the post-vulcanization tensile strength at break of the reinforcing layer obtained by rubber-coating the composite fibers is preferably not less than 29 N/mm$^2$.

In the tire of the present invention, the end count of the composite fibers (C) is preferably 5 to 65 fibers/50 mm, more preferably 10 to 60 fibers/50 mm. When the density of the embedded composite fibers (C) is less than 5 fibers/50 mm, the crack generation-inhibiting effect may be insufficient. Meanwhile, when the end count of the composite fibers (C) exceeds 65 fibers/50 mm, the composite fibers (C) are close to one another and may be fused together, making detachment more likely to occur in the vicinity of the fiber interface due to a strain stress, which is not preferred.

As a method of producing a composite strip in which the core-sheath type composite fibers (C) are embedded, first, the composite fibers (C) are parallelly arranged and coated with a rubber to prepare strips of a sheet-form rubber-fiber composite (composite preparation step). This step can be carried out by, for example, a method of parallelly arranging a prescribed number of the composite fibers (C) and then passing the fibers between rolls to coat the fibers with a rubber from both above and below, or a method of transferring fibers, which have been co-extruded or spun into a core-sheath form from a nozzle, on a horizontally moving rubber sheet and coating the fibers with a rubber from above. The resulting sheet-form rubber-composite fiber (C) composite contains a single composite fiber (C) in the thickness direction, and the sheet thickness may be, for example, 0.5 mm to 1.5 mm.

Next, the thus obtained rubber-composite fiber (C) composite is cut at intervals of, for example, 20 to 1,000 mm at an arbitrary angle (e.g., 90°) at which a reinforcing material is desired to be arranged as a tire reinforcing layer with respect to the longitudinal direction of the composite fiber (C), and the thus cut sheets are sequentially joined to obtain a composite strip of the rubber-composite fiber (C) composite (cutting step).

There is no particular restriction on the subsequent arrangement of the reinforcing layer between a narrow belt layer and a wide belt layer; however, for example, in secondary molding of a green tire, the thus obtained composite strip is pasted to a prescribed position of the belt layers (pasting step), and a rubber composition forming a tread portion is coated thereon, whereby a molded green tire can be produced.

The tire of the present invention can be produced by vulcanizing the green tire obtained in the above-described manner at a vulcanization temperature of 140°C to 190°C for 3 to 50 minutes in accordance with a conventional method (vulcanization step).

EXAMPLES

The tire of the present invention will now be described in more detail by way of Examples thereof.

<Examples 1 to 4 and Comparative Examples 1 and 2>

Tires of the type illustrated in FIG. 1 were produced at a tire size of 275/80R22.5. As illustrated, the second belt layer was a wide belt layer while the third belt layer was a narrow belt layer, and reinforcing layers were arranged between the second and the third belt layers. Further, as core-sheath type composite fibers, ones whose core material was a polypropylene and sheath material was a propylene-ethylene copolymer were used. The details of the wide belt layer, the narrow belt layer and the reinforcing layers are shown in Tables 1 and 2. The first belt layer and the fourth belt layer had a width of 190 mm and 100 mm and an angle of 50° and 16°, respectively. For each of the thus obtained tires, the durability was evaluated in accordance with the below-described procedure.

<Conventional Examples 1 to 4>

Tires were produced in the same manner as in Examples, except that no reinforcing layer was arranged. It is noted here that Conventional Examples 1, 2, 3 and 4 correspond to Examples 1, 2, 3 and 4, respectively.

<Example 5>

A tire of the type illustrated in FIG. 1 that had the positional relationship of the belt layers and the reinforcing layers as illustrated in FIG. 3 was produced at a tire size of 355/50R22.5. As illustrated in FIG. 3, the third belt layer and the first belt layer, which were a wide belt layer and a narrow belt layer, respectively, constituted an intersecting belt, and reinforcing layers were arranged between the first and the second belt layers. Further, as core-sheath type composite fibers, ones whose core material was a polypropylene and sheath material was a propylene-ethylene copolymer were used. The details of the wide belt layer, the narrow belt layer and the reinforcing layers are shown in Table 2. The second belt layer and the fourth belt layer had a width of 226 mm and 140 mm and an angle of 0° and 50°, respectively. For the thus obtained tires, the durability was evaluated in accordance with the below-described procedure.

<Conventional Example 5>

A tire was produced in the same manner as in Example, except that no reinforcing layer was arranged.

<Belt-End Durability>

The thus obtained test tires were each pressed against and rotated at a high speed on a streel drum of 3 m in diameter to evaluate the belt-end durability. Each tire had a normal internal pressure and was rotated at a constant speed of 60 km/h under a stepwise load condition where the load was increased from 66% by increments of 15%, with both the camber angle and the slip angle being set at 0°. The duration of each step was set at 4 hours for the first step, 6 hours for the second step, 24 hours for the third step, and 4 hours for the fourth and subsequent steps. The drum was stopped after a running distance of 6,000 km, and each tire was subsequently disassembled. The length of a crack from a belt end was measured at 36 spots on the belt circumference on both sides, and the average length of cracks was calculated. The results thereof were each presented as an index, taking the value of Conventional Example 1 as 100 for Example 1 and Comparative Examples 1 and 2, taking the value of Conventional Example 2 as 100 for Example 2, taking the value of Conventional Example 3 as 100 for Example 3, taking the value of Conventional Example 4 as 100 for Example 4, or taking the value of Conventional Example 5 as 100 for Example 5. It is noted here that the temperature around the drum was controlled at 38°C. A smaller index value means a shorter and more favorable crack length.

[Table 1]

| | | Example 1 | Comparative Example 1 | Comparative Example 2 | Conventional Example 1 | Example 2 | Conventional Example 2 |
|---|---|---|---|---|---|---|---|
| Wide belt layer | Angle (°) | -16 | -16 | -16 | -16 | -30 | -30 |
| | Width (mm) | 220 | 220 | 220 | 220 | 220 | 220 |
| Narrow belt layer | Angle (°) | 16 | 16 | 16 | 16 | 30 | 30 |
| | Width (mm) | 200 | 200 | 200 | 200 | 200 | 200 |
| Difference in half-width (mm) | | 10 | 10 | 10 | 10 | 10 | 10 |
| Reinforcing layer | Angle (°) | 16 | 16 | -16 | none | 30 | none |
| Position of inner end of reinforcing layer *1 | | + | + | + | none | + | none |
| Position of outer end of reinforcing layer *2 | | + | - | + | none | + | none |

(continued)

|  |  | Example 1 | Comparative Example 1 | Comparative Example 2 | Conventional Example 1 | Example 2 | Conventional Example 2 |
|---|---|---|---|---|---|---|---|
| Belt end durability (index) | 3 belt layers | 65 | 63 | 105 | 100 | 85 | 100 |
|  | 2 belt layers | 98 | 104 | 100 | 100 | 100 | 100 |
|  | 1 belt layers | 100 | 100 | 100 | 100 | 100 | 100 |

*1 "+" and "-" indicate positions on the inner side and the outer side than an end of the narrow belt layer, respectively.
*2: "+" and "-" indicate positions on the inner side and the outer side than an end of the wide belt layer, respectively.

[Table 2]

|  |  | Example 3 | Conventional Example 3 | Example 4 | Conventional Example 4 | Example 5 | Conventional Example 5 |
|---|---|---|---|---|---|---|---|
| Wide belt layer | Angle (°) | -35 | -35 | -40 | -40 | -16 | -16 |
|  | Width (mm) | 220 | 220 | 220 | 220 | 290 | 290 |
| Narrow belt layer | Angle (°) | 35 | 35 | 40 | 40 | 50 | 50 |
|  | Width (mm) | 200 | 200 | 200 | 200 | 278 | 278 |
| Difference in half-width (mm) |  | 10 | 10 | 10 | 10 | 6 | 6 |
| Reinforcing layer | Angle (°) | 35 | none | 40 | none | 50 | none |
| Position of inner end of reinforcing layer *1 |  | + | none | + | none | + | none |
| Position of outer end of reinforcing layer *2 |  | + | none | + | none | + | none |
| Belt end durability (index) | 3 belt layers | 84 | 100 | 88 | 100 | 100 | 100 |
|  | 2 belt layers | 100 | 100 | 100 | 100 | 100 | 100 |
|  | 1 belt layers | 100 | 100 | 100 | 100 | 89 | 100 |

From Tables 1 and 2, it is seen that the belt end durability was improved in the tires according to the present invention.

DESCRIPTION OF SYMBOLS

10: pneumatic tire (tire)
11: tread portion
12: side wall portion

| 13: | bead portion |
|---|---|
| 14: | carcass |
| 15: | bead core |
| 16: | bead filler |
| 17, 27, 37, 47, 57, 117: | belt |
| 18, 28, 38, 48, 58: | reinforcing layer |

**Claims**

1. A pneumatic tire (10) comprising: a belt (17, 27, 37, 47, 57, 117) comprising an intersecting belt composed of a wide belt layer (17b) having a large width and a narrow belt layer (17c) having a small width, said small width being a width smaller than the large width of the wide belt layer (17b), that are laminated such that their reinforcing cord directions intersect with each other, radially between the wide belt layer (17b) and the narrow belt layer (17c) a reinforcing layer (18, 28, 38, 48, 58) is arranged,
   wherein a widthwise inner end of the reinforcing layer (18, 28, 38, 48, 58) is on an inner side than a widthwise end of the narrow belt layer (17c), while a widthwise outer end of the reinforcing layer (18, 28, 38, 48, 58) is on an outer side than the widthwise end of the narrow belt layer (17c) but on the inner side than a widthwise end of the wide belt layer (17b), **characterized in that**:

   core-sheath type composite fibers (C), whose core portion is composed of a high-melting-point resin (A) having a melting point of 150°C or higher and sheath portion is composed of a resin material (B) that contains an olefin-based polymer (D) having a melting point of not higher than a tire vulcanization temperature, are embedded in the reinforcing layer (18, 28, 38, 48, 58), and
   an angle of the core-sheath type composite fibers (C) is substantially the same as that of a reinforcing cord of the narrow belt layer (17c),
   wherein the angle of the core-sheath type composite fibers (C) refers to the angle of inclination of the fibers with respect to the circumferential direction, and
   wherein substantially the same refers to a case where the difference between the angle of the core-sheath type composite fibers (C) of the reinforcing layers (18, 28, 38, 48, 58) and the angle of the reinforcing cords of the narrow belt layer (17c) is 5° or smaller.

2. The pneumatic tire (10) according to claim 1, wherein a reinforcing cord of the wide belt layer (17b) and a reinforcing cord of the narrow belt layer (17c) each have an angle of 30° or smaller in an absolute value with respect to a circumferential direction.

3. The pneumatic tire (10) according to claim 1 or 2, wherein a difference between a half-width of the narrow belt layer (17c) and that of the wide belt layer (17b) is 5 to 40 mm.

4. The pneumatic tire (10) according to any one of claims 1 to 3, wherein the belt (17, 27, 37, 47, 57, 117) comprises four belt layers, and the intersecting belt is composed of a second belt layer and a third belt layer from a tire radial-direction inner side.

5. The pneumatic tire (10) according to any one of claims 1 to 3, wherein the belt (17, 27, 37, 47, 57, 117) comprises four belt layers, and the intersecting belt is composed of a first belt layer and a third belt layer from a tire radial-direction inner side.

**Patentansprüche**

1. Luftreifen (10), der Folgendes umfasst: einen Gürtel (17, 27, 37, 47, 57, 117), der einen kreuzenden Gürtel umfasst, der aus einer breiten Gürtellage (17b), die eine große Breite aufweist, und einer schmalen Gürtellage (17c), die eine kleine Breite aufweist, wobei die kleine Breite eine Breite ist, die kleiner ist als die große Breite der breiten Gürtellage (17b), besteht, die derart geschichtet sind, dass sich ihre Verstärkungskordrichtungen miteinander schneiden, wobei in Radialrichtung zwischen der breiten Gürtellage (17b) und der schmalen Gürtellage (17c) eine Verstärkungslage (18, 28, 38, 48, 58) angeordnet ist,
   wobei sich ein in Breitenrichtung inneres Ende der Verstärkungslage (18, 28, 38, 48, 58) auf einer weiter inneren Seite als ein Ende der schmalen Gürtellage (17c) in Breitenrichtung befindet, während sich ein in Breitenrichtung äußeres Ende der Verstärkungslage (18, 28, 38, 48, 58) auf einer weiter äußeren Seite als das Ende der schmalen Gürtellage (17c) in Breitenrichtung, aber auf der weiter inneren Seite als ein Ende der breiten Gürtellage (17b) in Breitenrichtung, befindet, **dadurch gekennzeichnet, dass**:

Verbundfasern (C) des Kern-Mantel-Typs, deren Kernabschnitt aus einem Harz (A) mit hohem Schmelzpunkt besteht, das einen Schmelzpunkt von 150 °C oder höher aufweist, und deren Mantelabschnitt aus einem Harzmaterial (B) besteht, das ein Polymer (D) auf Grundlage von Olefin enthält, das einen Schmelzpunkt, nicht höher als eine Reifen-Vulkanisationstemperatur, aufweist, in der Verstärkungslage (18, 28, 38, 48, 58) eingebettet sind und

ein Winkel der Verbundfasern (C) des Kern-Mantel-Typs im Wesentlichen der gleiche ist wie derjenige eines Verstärkungskords der schmalen Gürtellage (17c),

wobei sich der Winkel der Verbundfasern (C) des Kern-Mantel-Typs auf den Neigungswinkel der Fasern in Bezug auf die Umfangsrichtung bezieht und

wobei sich im Wesentlichen dasselbe auf einen Fall bezieht, in dem die Differenz zwischen dem Winkel der Verbundfasern (C) des Kern-Mantel-Typs der Verstärkungslagen (18, 28, 38, 48, 58) und dem Winkel der Verstärkungskords der schmalen Gürtellage (17c) 5° oder weniger beträgt.

**2.** Luftreifen (10) nach Anspruch 1, wobei ein Verstärkungskord der breiten Gürtellage (17b) und ein Verstärkungskord der schmalen Gürtellage (17c) jeweils einen Winkel von 30° oder weniger in einem absoluten Wert in Bezug auf eine Umfangsrichtung aufweisen.

**3.** Luftreifen (10) nach Anspruch 1 oder 2, wobei eine Differenz zwischen einer halben Breite der schmalen Gürtellage (17c) und derjenigen der breiten Gürtellage (17b) 5 bis 40 mm beträgt.

**4.** Luftreifen (10) nach einem der Ansprüche 1 bis 3, wobei der Gürtel (17, 27, 37, 47, 57, 117) vier Gürtellagen umfasst und der kreuzende Gürtel aus einer zweiten Gürtellage und einer dritten Gürtellage von einer in Reifenradialrichtung inneren Seite aus besteht.

**5.** Luftreifen (10) nach einem der Ansprüche 1 bis 3, wobei der Gürtel (17, 27, 37, 47, 57, 117) vier Gürtellagen umfasst und der kreuzende Gürtel aus einer ersten Gürtellage und einer dritten Gürtellage von einer in Reifenradialrichtung inneren Seite aus besteht.

**Revendications**

**1.** Bandage pneumatique (10), comprenant une ceinture (17, 27, 37, 47, 57, 117) comprenant une ceinture à intersection composée d'une couche de ceinture large (17b) ayant une grande largeur, et d'une couche de ceinture étroite (17c) ayant une largeur réduite, ladite largeur réduite étant inférieure à la grande largeur de la couche de ceinture large (17b), qui sont stratifiées de sorte que les directions de leurs câblés de renforcement se coupent mutuellement, une couche de renforcement (18, 28, 38, 48, 58) étant agencée radialement entre la couche de ceinture large (17b) et la couche de ceinture étroite (17c) ;

dans lequel une extrémité interne dans le sens de la largeur de la couche de renforcement (18, 28, 38, 48, 58) se situe sur un côté plus interne par rapport à une extrémité dans le sens de la largeur de la couche de ceinture étroite (17c), tandis qu'une extrémité externe dans le sens de la largeur de la couche de renforcement (18,28, 38, 48, 58) se situe sur un côté plus externe par rapport à l'extrémité de la couche de ceinture étroite (17c) dans le sens de la largeur, mais sur le côté plus interne par rapport à une extrémité de la couche de ceinture large (17b) dans le sens de la largeur, **caractérisé en ce que** :

des fibres composites du type âme-gaine (C), dont la partie d'âme est composée d'une résine à point de fusion élevé (A) ayant un point de fusion de 150°C ou plus, et la partie de gaine est composée d'un matériau de résine (B) qui contient un polymère à base d'oléfine (D) ayant un point de fusion non supérieur à une température de vulcanisation du bandage pneumatique, sont noyées dans la couche de renforcement (18, 28, 38, 48, 58) ; et un angle des fibres composites du type âme-gaine (C) est sensiblement identique à celui d'un câblé de renforcement de la couche de ceinture étroite (17c) ;

dans lequel l'angle des fibres composites du type âme-gaine (C) se réfère à l'angle d'inclinaison des fibres par rapport à la direction circonférentielle ; et

dans lequel sensiblement les mêmes critères se réfèrent à un cas où la différence entre l'angle des fibres composites du type âme-gaine (C) des couches de renforcement (18, 28, 38, 48, 58) et l'angle des câblés de renforcement de la couche de ceinture étroite (17c) correspond à 5° ou moins.

2. Bandage pneumatique (10) selon la revendication 1, dans lequel un câblé de renforcement de la couche de ceinture large (17b) et un câblé de renforcement de la couche de ceinture étroite (7c) forment chacun un angle de 30° ou moins en valeur absolue par rapport à une direction circonférentielle.

3. Bandage pneumatique (10) selon les revendications 1 ou 2, dans lequel une différence entre une demi-largeur de la couche de ceinture étroite (17c) et celle de la couche de ceinture large (17b) est comprise entre 5 et 40 mm.

4. Bandage pneumatique (10) selon l'une quelconque des revendications 1 à 3, dans lequel la ceinture (17, 27, 37, 47, 57, 117) comprend quatre couches de ceinture, et la ceinture intersection est composée d'une deuxième couche de ceinture et d'une troisième couche de ceinture, à partie du côté interne dans une direction radiale du bandage pneumatique.

5. Bandage pneumatique (10) selon l'une quelconque des revendications 1 à 3, dans lequel la ceinture (17, 27, 37, 47, 57, 117) comprend quatre couches de ceinture, et la ceinture à intersection est composée d'une première couche de ceinture et d'une troisième couche de ceinture, à partir d'un côté interne dans la direction radiale du bandage pneumatique.

FIG. 1

FIG. 2 A

FIG. 2 B

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0929406 A
- JP 2008024104 B
- US 2005173042 A
- WO 2017030121 A